# EUROPEAN PATENT SPECIFICATION

(11) **EP 3 240 317 B1**
(45) Date of publication and mention of the grant of the patent: **19.02.2020**
(21) Application number: 15801974.5
(22) Date of filing: 06.05.2015
(51) Int. Cl.: H01Q 1/24, H01Q 1/48, H01Q 9/42, H01Q 5/328

(54) **SWITCHING METHOD FOR MOBILE TERMINAL SWITCHING ANTENNA**
UMSCHALTVERFAHREN FÜR ANTENNENUMSCHALTUNG EINES MOBILEN ENDGERÄTES
PROCÉDÉ DE COMMUTATION D'UNE ANTENNE À COMMUTATION D'UN TERMINAL MOBILE

(30) Priority: 01.12.2014 CN 201410711405
(43) Date of publication of application: 01.11.2017
(73) Proprietor: JRD Communication Inc., Shenzhen, Guangdong 518057 (CN)
(72) Inventor: PAN, Lingjian, Shenzhen Guangdong 518057 (CN); LI, Jingjing, Shenzhen Guangdong 518057 (CN)
(74) Representative: Murgitroyd & Company
(86) International application number: PCT/CN2015/078419
(87) International publication number: WO 2016/086593

(56) References cited:
- WO-A1-2013/123485
- CN-A- 101 877 916
- CN-A- 103 457 041
- CN-A- 104 518 812
- CN-U- 201 590 488
- US-A1- 2011 134 014
- US-A1- 2013 122 828

## Description

### CROSS-REFERENCE TO RELATED APPLICATIONS

This application claims the benefit of PCT International Application Serial No. PCT/CN2015/078419, filed May 06, 2015, which in turn claims priority to China Patent Application No. 201410711405.6, filed December 01, 2014.

### TECHNICAL FIELD OF THE INVENTION

The present invention relates to a switching method of a mobile terminal switching antenna.

### BACKGROUND OF THE INVENTION

With the development of communication technology, mobile phones have become essential equipment for people. LTE (Long Term Evolution, commonly known as 4G) mobile phone technology has become an indispensable technical requirement for new mobile phones. However, LTE frequency bands are varied, and the frequency range is designed from 700MHz to 2.7GHz. This requires an increasingly high bandwidth of a mobile phone antenna, such that it becomes more difficult to research and develop the mobile phone antenna.

The LTE frequency bands are coming with a wider frequency range, and there is the frequency range of 700MHz and more than 2.5GHz. This raises the requirement of the antenna: a greater bandwidth which takes into account the efficiency of the antenna. If the bandwidth is not wide enough, and the antenna itself is not efficient, the mobile phone itself cannot get a proper transfer rate. The antenna itself is a physical structure, and its efficiency relates to the environment thereof. Current mobile phones are becoming thinner; as their functionality increases, their components also increase. The surrounding environment of the mobile phone antenna also deteriorates (the devices near the antenna increase, and the space becomes smaller). These will influence the efficiency of the antenna, thereby reducing user experience (slow download speed and increased power consumption).

WO2013/123485A1, relevant to the fields of mobile terminal antenna technologies, discloses a method for coupling a primary antenna to an auxiliary antenna portion with a current-controlled switch. The method further includes generating a unidirectional direct current or a first bias voltage having a first polarity to cause the current-controlled switch to substantially form a conduction channel between the primary antenna and the auxiliary antenna portion. While the conduction channel is present, a first resonance frequency range of the primary antenna is frequency shifted to a second resonance frequency range.

US2011134014A1, relevant to the fields of mobile terminal antenna technologies, discloses at least three resonance frequencies obtained by two antenna elements. The antenna device includes antenna elements and, a wireless section for supplying power to each of the antenna elements and, a PIN diode for electrically connecting and disconnecting the antenna element and the wireless section with/from each other, the antenna elements and being provided so as to be capacitively coupled to each other during the electrical disconnection between the antenna element and the wireless section which electrical disconnection is made by the PIN diode.

US2013/122828A1, relevant to the fields of mobile terminal antenna technologies, discloses a mobile terminal including an antenna to change an operating frequency band and a sub-resonance generator that generates a sub-resonance to shift the operating frequency band. The sub-resonance generator may be electrically or physically connected to a main antenna of the mobile terminal. The sub-resonance generator is connected to at least one impedance matcher and switch, and the opening and closing of the switch results in the generation of the sub-resonance. A sub-resonance generated in a higher frequency band than a first frequency band of the antenna device may result in the shift to a third frequency band with a main resonance at a lower frequency than the main resonance of the first frequency band and vice versa.

Thus, there is a need to improve and develop the prior art.

### SUMMARY OF THE INVENTION

A technical problem which the present invention needs to solve is to provide a switching method of a mobile terminal switching antenna for the above-mentioned disadvantage of the prior art. The invention is defined by independent claim 1, optional features are set out in the dependent claims.

A technical solution of the present invention is implemented as follows.

A mobile terminal switching antenna includes: an antenna; a radio-frequency (RF) module; a baseband chip utilized to provide a control signal; a voltage dividing module utilized to perform voltage division for the control signal; a noise barrier module utilized to perform noise barrier for the control signal; a DC blocking module utilized to block a DC signal from entering the antenna; a unidirectional conduction module utilized to unidirectionally conduct the control signal; an antenna matching module utilized to match and tune the antenna while switching the antenna; the baseband chip coupled to the antenna via the RF module; the baseband chip coupled to the antenna sequentially via the voltage dividing module, the noise barrier module, and the DC blocking module; and the baseband chip being grounded sequentially via the voltage dividing module, the noise barrier module, the unidirectional conduction module, and the antenna matching module.

In the mobile terminal switching antenna, the voltage dividing module includes a first resistor, and the baseband chip is coupled to the noise barrier module via the first resistor.

In the mobile terminal switching antenna, the noise barrier module includes a first capacitor and a first inductor; the voltage dividing module is coupled to the DC blocking module via the first inductor, and the voltage dividing module is grounded via the first capacitor.

In the mobile terminal switching antenna, the DC blocking module includes a second capacitor. One end of the second capacitor is coupled to the noise barrier module and the unidirectional conduction module, and the other end of the second capacitor is coupled to the antenna.

In the mobile terminal switching antenna, the unidirectional conduction module includes a radio-frequency (RF) diode. An anode of the RF diode is respectively coupled to the noise barrier module and the DC blocking module, and a cathode of the RF diode is coupled to the antenna matching module.

In the mobile terminal switching antenna, the antenna matching module includes a second inductor. One end of the second inductor is coupled to the unidirectional conduction module, and the other end is grounded.

In the mobile terminal switching antenna, the antenna has a switching point; one end of the switching point is coupled to the antenna, and the other end is coupled to the DC blocking module.

In the mobile terminal switching antenna, when the baseband chip does not output the control signal, the antenna is in a first operative state which comprises a plurality of working frequency bands; when the baseband chip outputs the control signal, the antenna is in a second operative state which comprises another plurality of working frequency bands.

The switching method adopting the mobile terminal switching antenna includes the following steps of:
A. receiving the radio-frequency signal given a base station and scanning each frequency band by a base station and scanning each frequency band by a mobile terminal;
B. determining whether the currently scanned frequency band is in a plurality of working frequency bands, which are comprised in a first operative state of the antenna when the baseband chip does not output the control signal, if so, then performing step C; if not, then performing step D;
C. working in the first operative state by the antenna of the mobile terminal, and when the radio-frequency signal which is given by the base station and received by the mobile terminal is consistent with information of the frequency band of an operator desired by a SIM card of the mobile terminal, registering to a network for the mobile terminal working properly;
D. outputting the control signal by the baseband chip, the antenna of the mobile terminal being in a second operative state which comprises another plurality of working frequency bands, and scanning each of the frequency bands individually by the mobile terminal, when the radio-frequency signal which is given by the base station and received by the mobile terminal is consistent with the information of the frequency band of the operator desired by the SIM card of the mobile terminal, registering to the network for the mobile terminal working properly.

The switching method of the mobile terminal switching antenna provided by the present invention effectively solves the problem that the bandwidth of the prior art mobile terminal antenna is not wide enough, the antenna itself is inefficient, and the mobile terminal itself cannot get a proper transmission rate. They include an antenna; an RF module; a baseband chip utilized to provide a control signal; a voltage dividing module utilized to perform voltage division for the control signal; a noise barrier module utilized to perform noise barrier for the control signal; a DC blocking module utilized to block a DC signal from entering the antenna; a unidirectional conduction module utilized to unidirectionally conduct the control signal; an antenna matching module utilized to match and tune the antenna while switching the antenna; the baseband chip coupled to the antenna via the RF module; the baseband chip coupled to the antenna sequentially via the voltage dividing module, the noise barrier module, and the DC blocking module; and the baseband chip being grounded sequentially via the voltage dividing module, the noise barrier module, the unidirectional conduction module, and the antenna matching module. By the baseband chip not emitting or emitting the control signal to the antenna, the switching of the operative states of the antenna is thus realized, and the range of the frequency bands which can be received by the antenna is changed correspondingly, thereby greatly enhancing the receiving and transmitting performances of the mobile terminal antenna. Based on the enhancement of the receiving performance, users can still receive the signal well from the base station for calls in a place far from the base station, and based on the enhancement of the receiving performance, the operating current of the RF transmission of the mobile terminal can be reduced to allow the battery to work longer, making the mobile terminal cooler, and providing convenience for the users.

### BRIEF DESCRIPTION OF THE DRAWINGS

FIG. 1 is a schematic drawing illustrating a prior art mobile terminal antenna;
FIG. 2 is a block diagram illustrating a mobile terminal switching antenna, as such not forming part of the present invention; and
FIG. 3 is a flow chart illustrating a switching method of the mobile terminal switching antenna according to a preferred embodiment of the present invention.

### DETAILED DESCRIPTION OF THE INVENTION

The present invention provides a a switching method for a mobile terminal switching antenna. To make the objectives, technical solutions, and advantages of the present disclosure clearer, the present disclosure will be further described hereinbelow with reference to the attached drawings and embodiments thereof. It should be understood that the specific embodiments described herein are merely utilized to explain the present invention but not to limit the present invention.

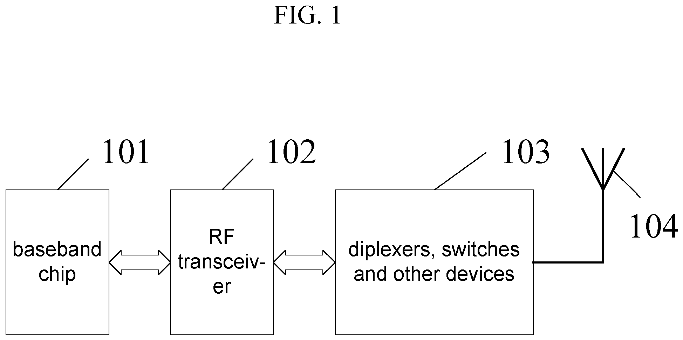

Refer to FIG. 1, which is a schematic drawing illustrating a prior art mobile terminal antenna. As shown in the drawing, the prior art mobile terminal antenna includes a baseband chip 101, an RF (Radio Frequency) transceiver 102, amplifiers, diplexers, switches, and other devices 103, and an antenna 104. The antenna 104, which is utilized as a structural component or a physical element, is utilized as a passive device to be directly connected to the RF module for transmitting and receiving signals. The baseband chip 101 encodes and modulates voice and data information collected or generated by the mobile terminal and transmits it to the RF transceiver 102, and then it is converted into a radio-frequency signal by the RF transceiver 102. After passing through the diplexers, switches, and other devices 103, it is radiated out via the antenna 104. This is the principle of the antenna of the conventional mobile terminal, and it belongs to the prior art. It will not be described in detail herein.

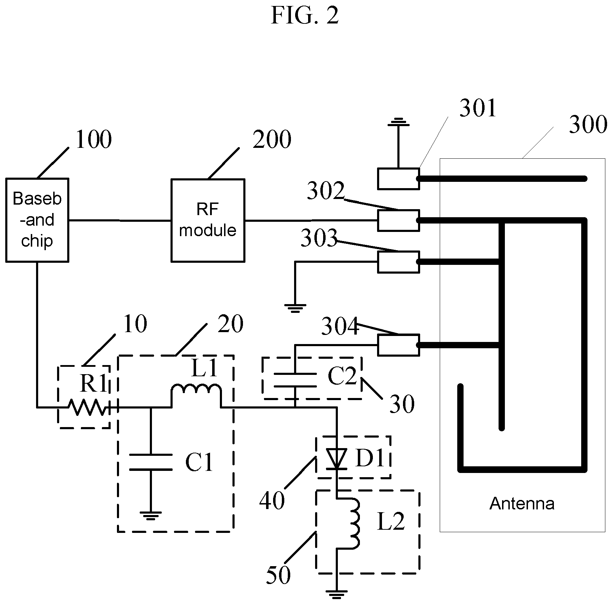

Refer to FIG. 2, which is a block diagram illustrating a mobile terminal switching antenna, as such not forming part of the present invention. As shown in the drawing, the mobile terminal switching antenna includes: an antenna 300; an RF module 200; a baseband chip 100 utilized to provide a control signal; a voltage dividing module 10 utilized to perform voltage division for the control signal; a noise barrier module 20 utilized to perform noise barrier for the control signal; a DC blocking module 30 utilized to block a DC signal from entering the antenna; a unidirectional conduction module 40 utilized to unidirectionally conduct the control signal; an antenna matching module 50 utilized to match and tune the antenna while switching the antenna;
the baseband chip 100 coupled to the antenna 300 via the RF module 200; the baseband chip 100 coupled to the antenna 300 sequentially via the voltage dividing module 10, the noise barrier module 20, and the DC blocking module 30; and the baseband chip 100 being grounded sequentially via the voltage dividing module 10, the noise barrier module 20, the unidirectional conduction module 40, and the antenna matching module 50.

Specifically, the RF module 200 is the RF (Radio Frequency) transceiver, the amplifiers, diplexers, switches and other devices as described in FIG. 1. The baseband chip 100 and the antenna 300 are the components of the mobile terminal. A circuit is added to supply power to the antenna based on the conventional antenna. That is, the baseband chip 100 is coupled to the antenna 300 sequentially via the voltage dividing module 10, the noise barrier module 20, and the DC blocking module 30. The baseband chip 100 is grounded sequentially via the voltage dividing module 10, the noise barrier module 20, the unidirectional conduction module 40, and the antenna matching module 50, so that when the baseband chip 100 does not output the control signal, the antenna 300 is in a first operative state which comprises a plurality of working frequency bands; when the baseband chip 100 outputs the control signal, the antenna 300 is in a second operative state which comprises another plurality of working frequency bands. That is to say, when the baseband chip 100 does not emit or does emit the control signal respectively, the antenna 300 has the different working frequency bands correspondingly. The present invention realizes the switching of the antenna by means of controlling whether the baseband chip 100 emits the control signal or not, thereby greatly enhancing the receiving and transmitting performances of the mobile terminal antenna. Based on the enhancement of the receiving performance, users can still receive the signal well from the base station for calls in a place far from the base station, and based on the enhancement of the receiving performance, the operating current of the RF transmission of the mobile terminal can be reduced to allow the battery to work longer and to make the mobile terminal cooler.

Refer to FIG. 2 again, specifically, the voltage dividing module 10 includes a first resistor R1; the baseband chip 100 is coupled to the noise barrier module 20 via the first resistor R1. In actual application, the role of the first resistor R1 is to divide voltage for avoiding the voltage of the control signal given by the baseband chip 100 to be too high and to impact other devices. The general value thereof is about 50 to 100 ohms.

Furthermore, the noise barrier module 20 includes a first capacitor C1 and a first inductor L1; the voltage dividing module 10 is coupled to the DC blocking module 30 via the first inductor L1; and the voltage dividing module 10 is grounded further via the first capacitor C1. The role of the first capacitor C1 is to eliminate the noise of the control signal for avoiding affecting the antenna and to make noise directly go to the ground, and the general value thereof is about 33 to 100 picofarads (pf). The role of the first inductor L1 which is similar to that of the first capacitor C1 is to prevent the noise from passing. The general value of about 40 to 100 nanohenrys (nh).

Furthermore, the DC blocking module 30 includes a second capacitor C2. One end of the second capacitor C2 is coupled to the noise barrier module 20 and the unidirectional conduction module 40, and the other end of the second capacitor C2 is coupled to the antenna 300.

The unidirectional conduction module comprises an RF diode D1. An anode of the RF diode D1 is respectively coupled to the noise barrier module 20 and the DC blocking module 30, and a cathode of the RF diode D1 is coupled to the antenna matching module 50.

The antenna matching module 50 includes a second inductor L2. One end of the second inductor L2 is coupled to the unidirectional conduction module, and the other end is grounded.

Specifically, the role of the second capacitor C2 is to prevent a DC signal from passing, to avoid it from entering the antenna 300 and let it go to the ground via the RF diode D1 and the second inductor L2. The role of the RF diode D1 is to be in a straight-through state when the control signal passes through it, so that the signal passes through the RF diode D1 and the second inductor L2 to the ground for forming a loop. The role of the second inductor L2 is to be utilized as match tuning of the antenna when the switching works, and the general value thereof is about 8nh ∼ 20nh.

Referring to the circuit diagram shown in FIG. 2 again, the control signal is output from a GPIO (General Purpose Input Output, referred to as GPIO or bus extender, a function provided here is a control function) port. The GPIO control signal output from the baseband chip 100 does not flow through the second capacitor C2 and into the antenna 300. The noise contained therein will be obstructed by the first inductor L1 and directly grounded via the first capacitor at the same time.

While the antenna 300 is in a signal transmitting state, the radio-frequency signal goes to the antenna 300 from the RF module 200. While the control signal makes the RF diode D1 be in an open state, the current on the antenna 300 passes through the RF diode D1, and does not enter the baseband chip 100 because of the obstruction effect of the first inductor L1.

In the process of practice application, the mobile terminal is a mobile phone. Since the radio frequency of the phone antenna is high, at 700MHz or more, and the control signal of the baseband chip 100 is a DC signal (with high-frequency noise), the electrical signal always flows through the minimum impedance and then to the ground. Then the DC signal will not go through the second capacitor C2, but through the first inductor L1, the RF diode D1 and the second inductor L2 to ground. The noise goes through the first capacitor C1 to the ground, and the signal of the antenna goes through the second capacitor C2, the RF diode D1 and the second inductor L2 to the ground, so as not to affect the receiving and emitting of the radio-frequency signal.

Referring to FIG. 2 again, in the prior art, the antenna 300 typically has a feed point 302 and two ground points. The two ground points herein are a first ground point 301 and a second ground point 303 respectively. The first ground point 301 is utilized as a parasitic antenna for increasing the operating bandwidth of the antenna. This belongs to the prior art. Certainly, the prior art mobile terminal antenna may also have only one feed point and one ground point. On these bases, the present invention is to add a switching point 304. One end of the switching point 304 is coupled to the antenna 300; another end thereof is coupled to the second capacitor C2 and connected to the ground sequentially via the second capacitor C2, the RF diode D1, and the second inductor L2. Meanwhile, the other end is coupled to the baseband chip 100 via the first inductor L1, the first capacitor C1, and the first resistor R1, in which the first capacitor C1 is grounded.

In the mobile terminal switching antenna, when the baseband chip 100 does not output the control signal, the antenna 300 is in a first operative state which comprises a plurality of working frequency bands; when the baseband chip 100 outputs the control signal, the antenna 300 is in a second operative state which comprises another plurality of working frequency bands. That is to say, when the baseband chip 100 does not output the control signal to the first resistor R1, the antenna 300 is in the first operative state. The first operative state includes the plurality of working frequency bands. When the baseband chip 100 outputs the control signal to the first resistor R1 and finally to the antenna 300, the antenna 300 is in the second operative state. The second operative state includes another plurality of working frequency bands. The working frequency bands are different from those of the first operative state. Accordingly, the mobile terminal switching antenna of the present invention can work in more frequency bands. The antenna can cover more of the frequency bands and is more effective.

The mobile terminal switching antenna allows the antenna to work in different frequency bands at a lower cost and has a good antenna performance at the same time, thereby obtaining a greater bandwidth and higher efficiency in a limited space inside the mobile phone. This realizes the RF antenna of the mobile terminal working in a larger frequency range and provides a higher antenna efficiency. Although many existing chips also provide a dynamically adjustable antenna, the chips are expensive, and the circuits thereof are more complex, resulting in an increased tuning difficulty. The shown mobile terminal switching antenna is relatively more concise, and the cost is very low relative to the chips. The tuning is relatively simple, and the tuning effect is even higher than that of the chips. It has reference significance and provides convenience to the users.

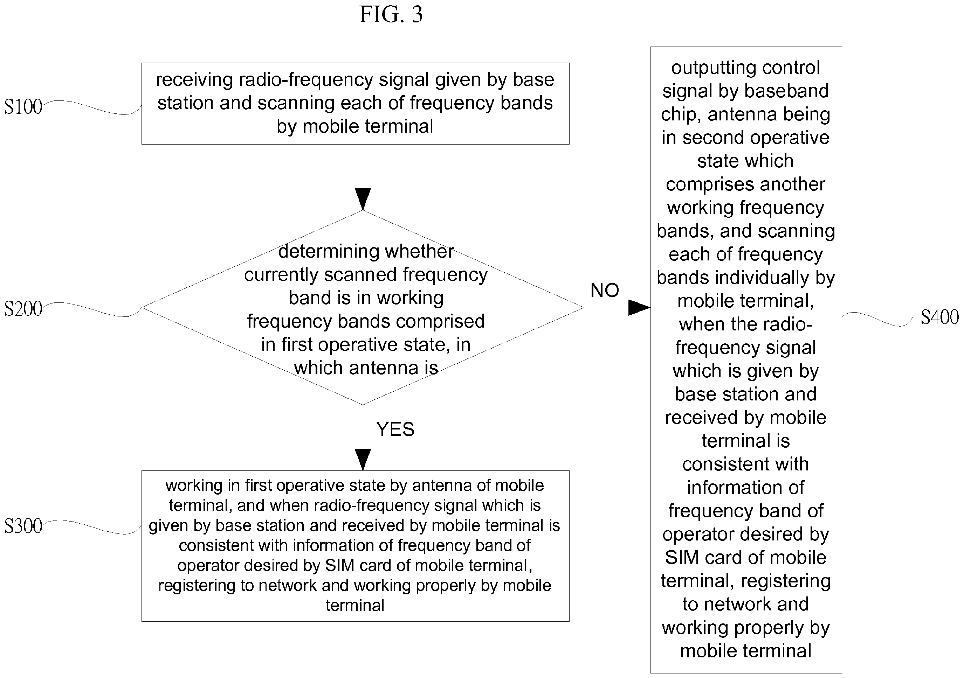

Based on the above-mentioned mobile terminal switching antenna, the present invention provides a switching method of the mobile terminal switching antenna. As shown in FIG. 3, the method includes the following steps of:
step S100, receiving the radio-frequency signal given a base station and scanning each frequency band by a base station and scanning each frequency band by a mobile terminal;
step S200, determining whether the currently scanned frequency band is in a plurality of working frequency bands, which are comprised in a first operative state of the antenna when the baseband chip does not output the control signal, if so, then performing step S300; if not, then performing step S400;
step S300, working in the first operative state by the antenna of the mobile terminal, and when the radio-frequency signal which is given by the base station and received by the mobile terminal is consistent with information of the frequency band of an operator desired by a SIM card of the mobile terminal, registering to a network for the mobile terminal working properly;
step S400, outputting the control signal by the baseband chip, the antenna of the mobile terminal being in a second operative state which comprises another plurality of working frequency bands, and scanning each of the frequency bands individually by the mobile terminal, when the radio-frequency signal which is given by the base station and received by the mobile terminal is consistent with the information of the frequency band of the operator desired by the SIM card of the mobile terminal, registering to the network for the mobile terminal working properly.

Specifically, after the phone is switched on, it will start scanning the frequency bands one by one and receive the radio-frequency signal given by the base station in space. Meanwhile, the baseband chip is aware of the information of the currently scanned frequency band, and determines whether the currently scanned frequency band is in the working frequency bands, which are comprised in the first operative state of the antenna when the baseband chip does not output the control signal. If the antenna is in the first operative state, then the baseband chip does not output the GPIO control signal, and then mobile terminal antenna works in the correct first operative state. When the radio-frequency signal which is given by the base station and received by the mobile terminal is consistent with the information of the frequency band of the operator desired by the SIM card of the mobile terminal, registering to the network for the mobile terminal working properly.

When the scanned frequency band is not in the first operative state, then the mobile terminal antenna is switched to the second operative state. The baseband chip emits the GPIO control signal for switching the antenna working in the second operative state. In such scanning one by one, when the radio-frequency signal received by the mobile phone and given by the base station is consistent with the infonnation of the frequency band of the operator desired by the mobile terminal, the mobile terminal works in the second operative state. When the radio-frequency signal which is given by the base station and received by the mobile terminal is consistent with the infonnation of the frequency band of the operator desired by the SIM card of the mobile terminal, registering to the network for the mobile terminal working properly.

In summary, the switching method of the mobile terminal switching antenna includes the antenna, the RF module, the baseband chip, the voltage dividing module, the noise barrier module, the DC blocking module, the unidirectional conduction module, and the antenna matching module. The baseband chip is coupled to the antenna via the RF module. The baseband chip is coupled to the antenna sequentially via the voltage dividing module, the noise barrier module, and the DC blocking module. The baseband chip is grounded sequentially via the voltage dividing module, the noise barrier module, the unidirectional conduction module, and the antenna matching module. By the baseband chip not emitting or emitting the control signal to the antenna, the switching of the operative states of the antenna are thus realized, and the range of the frequency bands which can be received by the antenna is changed correspondingly, thereby greatly enhancing the receiving and transmitting performances of the mobile terminal antenna. Based on the enhancement of the receiving performance, users can still receive the signal well from the base station for calls in a place far from the base station, and based on the enhancement of the receiving performance, operating current of the RF transmission of the mobile terminal can be reduced to allow the battery to work longer, make the mobile terminal cooler, and providing convenience to the users.

## Claims

1. A switching method adopting a mobile terminal switching antenna, wherein
the mobile terminal switching antenna comprises
an antenna (300);
a radio-frequency (RF) module (200);
a baseband chip (100) utilized to provide a control signal;
a voltage dividing module (10) utilized to perform voltage division for the control signal;
a noise barrier module (20) utilized to perform noise barrier for the control signal;
a direct current (DC) blocking module (30) utilized to block a DC signal from entering the antenna (300);
a unidirectional conduction module (40) utilized to unidirectionally conduct the control signal; and
an antenna matching module (50) utilized to match and tune the antenna (300) while switching the antenna (300);
wherein the baseband chip (100) is coupled to the antenna (300) via the RF module (200); the baseband chip (100) is coupled to the antenna (300) sequentially via the voltage dividing module (10), the noise barrier module (20), and the DC blocking module (30); and the baseband chip (100) is grounded sequentially via the voltage dividing module (10), the noise barrier module (20), the unidirectional conduction module (40), and the antenna matching module (50);
the switching method is **characterized in that** the switching method comprises the following steps:
A, receiving a radio-frequency signal given by a base station and scanning each frequency band by the mobile terminal;
B, determining whether the currently scanned frequency band is in a plurality of working frequency bands, which are comprised in a first operative state of the antenna (300) when the baseband chip (100) does not output the control signal, if so, then performing step C; if not, then performing step D;
C, working in the first operative state by the antenna (300) of the mobile terminal, and when the radio-frequency signal which is given by the base station and received by the mobile terminal is consistent with information of the frequency band of an operator desired by a SIM card of the mobile terminal, registering to a network for the mobile terminal working properly; and
D, outputting the control signal by the baseband chip (100), the antenna (300) of the mobile terminal being in a second operative state which comprises another plurality of working frequency bands, and scanning each of the frequency bands individually by the mobile terminal, when the radio-frequency signal which is given by the base station and received by the mobile terminal is consistent with the information of the frequency band of the operator desired by the SIM card of the mobile terminal, registering to the network for the mobile terminal working properly.

2. The switching method according to claim 1, **characterized in that** the voltage dividing module (10) comprises a first resistor; the baseband chip (100) is coupled to the noise barrier module (20) via the first resistor.

3. The switching method according to claim 1, **characterized in that** the noise barrier module (20) comprises a first capacitor and a first inductor; the voltage dividing module (10) is coupled to the DC blocking module (30) via the first inductor; and the voltage dividing module (10) is grounded via the first capacitor.

4. The switching method according to claim 1, **characterized in that** the DC blocking module (30) comprises a second capacitor; one end of the second capacitor is coupled to the noise barrier module (20) and the unidirectional conduction module (40), and the other end of the second capacitor is coupled to the antenna (300).

5. The switching method according to claim 1, **characterized in that** the unidirectional conduction module (40) comprises an RF diode; an anode of the RF diode is respectively coupled to the noise barrier module (20) and the DC blocking module (30), and a cathode of the RF diode is coupled to the antenna matching module (50).

6. The switching method according to claim 1, **characterized in that** the antenna matching module (50) comprises a second inductor; one end of the second inductor is coupled to the unidirectional conduction module (40), and the other end is grounded.

7. The switching method according to claim 1, **characterized in that** the antenna (300) has a switching point; one end of the switching point is coupled to the antenna (300), and the other end is coupled to the DC blocking module (30).

8. The switching method according to claim 2, **characterized in that** the antenna (300) has a switching point; one end of the switching point is coupled to the antenna (300), and the other end is coupled to the DC blocking module (30).

9. The switching method according to claim 3, **characterized in that** the antenna (300) has a switching point; one end of the switching point is coupled to the antenna (300), and the other end is coupled to the DC blocking module (30).

10. The switching method according to claim 4, **characterized in that** the antenna (300) has a switching point; one end of the switching point is coupled to the antenna (300), and the other end is coupled to the DC blocking module (30).

11. The switching method according to claim 5, **characterized in that** the antenna (300) has a switching point; one end of the switching point is coupled to the antenna (300), and the other end is coupled to the DC blocking module (30).

12. The switching method according to claim 6, **characterized in that** the antenna (300) has a switching point; one end of the switching point is coupled to the antenna (300), and the other end is coupled to the DC blocking module (30).

13. The switching method according to claim 1, **characterized in that** when the baseband chip (100) does not output the control signal, the antenna (300) is in a first operative state which comprises a plurality of working frequency bands; when the baseband chip (100) outputs the control signal, the antenna (300) is in a second operative state which comprises another plurality of working frequency bands.

## Patentansprüche

1. Ein Umschaltverfahren durch Anwenden einer Umschaltantenne eines mobilen Endgeräts, wobei die Umschaltantenne eines mobilen Endgeräts Folgendes beinhaltet:
eine Antenne (300);
ein Funkfrequenzmodul (RF-Modul, RF = Radio-Frequency) (200);
einen Basisbandchip (100), der verwendet wird, um ein Steuerungssignal bereitzustellen;
ein Spannungsteilungsmodul (10), das verwendet wird, um eine Spannungsteilung für das Steuerungssignal durchzuführen;
ein Rauschschutzmodul (20), das verwendet wird, um einen Rauschschutz für das Steuerungssignal durchzuführen;
ein Gleichstrom-Blockierungsmodul (DC-Blockierungsmodul, DC = Direct Current) (30), das verwendet wird, um das Eintreten eines DC-Signals in die Antenne (300) zu blockieren;
ein unidirektionales Leitungsmodul (40), das verwendet wird, um das Steuerungssignal unidirektional zu leiten; und
ein Antennenanpassungsmodul (50), das verwendet wird, um die Antenne (300) anzupassen und abzustimmen, während die Antenne (300) umgeschaltet wird;
wobei der Basisbandchip (100) über das RF-Modul (200) mit der Antenne (300) gekoppelt ist; der Basisbandchip (100) sequenziell über das Spannungsteilungsmodul (10), das Rauschschutzmodul (20) und das DC-Blockierungsmodul (30) mit der Antenne (300) gekoppelt ist; und der Basisbandchip (100) sequenziell über das Spannungsteilungsmodul (10), das Rauschschutzmodul (20), das unidirektionale Leitungsmodul (40) und das Antennenanpassungsmodul (50) geerdet ist;
wobei das Umschaltverfahren **dadurch gekennzeichnet ist, dass** das Umschaltverfahren die folgenden Schritte beinhaltet:
A, Empfangen eines Funkfrequenzsignals, das durch eine Basisstation ausgegeben wird, und Abtasten von jedem Frequenzband durch das mobile Endgerät;
B, Bestimmen, ob das aktuell abgetastete Frequenzband in einer Vielzahl von Arbeitsfrequenzbändern liegt, die in einem ersten Betriebszustand der Antenne (300) beinhaltet sind, wenn der Basisbandchip (100) das Steuerungssignal nicht ausgibt, falls ja, Durchführen von Schritt C; falls nein, Durchführen von Schritt D;
C, Arbeiten in dem ersten Betriebszustand durch die Antenne (300) des mobilen Endgeräts, und wenn das Funkfrequenzsignal, das durch die Basisstation ausgegeben und durch das mobile Endgerät empfangen wird, mit Informationen des Frequenzbandes eines durch eine SIM-Karte des mobilen Endgeräts gewünschten Betreibers übereinstimmt, Registrieren in einem Netzwerk, dass das mobile Endgerät ordnungsgemäß arbeitet; und
D, Ausgeben des Steuerungssignals durch den Basisbandchip (100), wobei sich die Antenne (300) des mobilen Endgeräts in einem zweiten Betriebszustand befindet, der eine andere Vielzahl von Arbeitsfrequenzbändern beinhaltet, und individuelles Abtasten von jedem der Frequenzbänder durch das mobile Endgerät, wenn das Funkfrequenzsignal, das durch die Basisstation ausgegeben und durch das mobile Endgerät empfangen wird, mit den Informationen des Frequenzbandes des durch die SIM-Karte des mobilen Endgeräts gewünschten Betreibers übereinstimmt, Registrieren in dem Netzwerk, dass das mobile Endgerät ordnungsgemäß arbeitet.

2. Umschaltverfahren gemäß Anspruch 1, **dadurch gekennzeichnet, dass** das Spannungsteilungsmodul (10) einen ersten Widerstand beinhaltet; wobei der Basisbandchip (100) über den ersten Widerstand mit dem Rauschschutzmodul (20) gekoppelt ist.

3. Umschaltverfahren gemäß Anspruch 1, **dadurch gekennzeichnet, dass** das Rauschschutzmodul (20) einen ersten Kondensator und einen ersten Induktor beinhaltet; wobei das Spannungsteilungsmodul (10) über den ersten Induktor mit dem DC-Blockierungsmodul (30) gekoppelt ist; und das Spannungsteilungsmodul (10) über den ersten Kondensator geerdet ist.

4. Umschaltverfahren gemäß Anspruch 1, **dadurch gekennzeichnet, dass** das DC-Blockierungsmodul (30) einen zweiten Kondensator beinhaltet; wobei ein Ende des zweiten Kondensators mit dem Rauschschutzmodul (20) und dem unidirektionalen Leitungsmodul (40) gekoppelt ist und das andere Ende des zweiten Kondensators mit der Antenne (300) gekoppelt ist.

5. Umschaltverfahren gemäß Anspruch 1, **dadurch gekennzeichnet, dass** das unidirektionale Leitungsmodul (40) eine RF-Diode beinhaltet; wobei eine Anode der RF-Diode jeweils mit dem Rauschschutzmodul (20) und dem DC-Blockierungsmodul (30) gekoppelt ist und eine Kathode der RF-Diode mit dem Antennenanpassungsmodul (50) gekoppelt ist.

6. Umschaltverfahren gemäß Anspruch 1, **dadurch gekennzeichnet, dass** das Antennenanpassungsmodul (50) einen zweiten Induktor beinhaltet; wobei ein Ende des zweiten Induktors mit dem unidirektionalen Leitungsmodul (40) gekoppelt ist und das andere Ende geerdet ist.

7. Umschaltverfahren gemäß Anspruch 1, **dadurch gekennzeichnet, dass** die Antenne (300) einen Umschaltpunkt aufweist; wobei ein Ende des Umschaltpunkts (300) mit der Antenne gekoppelt ist und das andere Ende mit dem DC-Blockierungsmodul (30) gekoppelt ist.

8. Umschaltverfahren gemäß Anspruch 2, **dadurch gekennzeichnet, dass** die Antenne (300) einen Umschaltpunkt aufweist; wobei ein Ende des Umschaltpunkts (300) mit der Antenne gekoppelt ist und das andere Ende mit dem DC-Blockierungsmodul (30) gekoppelt ist.

9. Umschaltverfahren gemäß Anspruch 3, **dadurch gekennzeichnet, dass** die Antenne (300) einen Umschaltpunkt aufweist; wobei ein Ende des Umschaltpunkts mit der Antenne (300) gekoppelt ist und das andere Ende mit dem DC-Blockierungsmodul (30) gekoppelt ist.

10. Umschaltverfahren gemäß Anspruch 4, **dadurch gekennzeichnet, dass** die Antenne (300) einen Umschaltpunkt aufweist; wobei ein Ende des Umschaltpunkts mit der Antenne (300) gekoppelt ist und das andere Ende mit dem DC-Blockierungsmodul (30) gekoppelt ist.

11. Umschaltverfahren gemäß Anspruch 5, **dadurch gekennzeichnet, dass** die Antenne (300) einen Umschaltpunkt aufweist; wobei ein Ende des Umschaltpunkts mit der Antenne (300) gekoppelt ist und das andere Ende mit dem DC-Blockierungsmodul (30) gekoppelt ist.

12. Umschaltverfahren gemäß Anspruch 6, **dadurch gekennzeichnet, dass** die Antenne (300) einen Umschaltpunkt aufweist; wobei ein Ende des Umschaltpunkts mit der Antenne (300) gekoppelt ist und das andere Ende mit dem DC-Blockierungsmodul (30) gekoppelt ist.

13. Umschaltverfahren gemäß Anspruch 1, **dadurch gekennzeichnet, dass**, wenn der Basisbandchip (100) das Steuerungssignal nicht ausgibt, sich die Antenne (300) in einem ersten Betriebszustand befindet, der eine Vielzahl von Arbeitsfrequenzbändern beinhaltet; wenn der Basisbandchip (100) das Steuerungssignal ausgibt, sich die Antenne (300) in einem zweiten Betriebszustand befindet, der eine andere Vielzahl von Arbeitsfrequenzbändern beinhaltet.

## Revendications

1. Un procédé de commutation adoptant une antenne à commutation de terminal mobile, dans lequel l'antenne à commutation de terminal mobile comprend
une antenne (300) ;
un module radiofréquence (RF) (200) ;
une puce de bande de base (100) utilisée pour fournir un signal de commande ;
un module diviseur de tension (10) utilisé pour effectuer une division de tension pour le signal de commande ;
un module de suppression de bruit (20) utilisé pour effectuer une suppression de bruit pour le signal de commande ;
un module de blocage de courant continu (CC) (30) utilisé pour bloquer un signal CC afin qu'il n'entre pas dans l'antenne (300) ;
un module de conduction unidirectionnelle (40) utilisé pour conduire le signal de commande de manière unidirectionnelle ; et
un module d'adaptation d'antenne (50) utilisé pour adapter et accorder l'antenne (300) pendant la commutation de l'antenne (300) ;
dans lequel la puce de bande de base (100) est couplée à l'antenne (300) par l'intermédiaire du module RF (200) ; la puce de bande de base (100) est couplée à l'antenne (300) par l'intermédiaire séquentiellement du module diviseur de tension (10), du module de suppression de bruit (20) et du module de blocage CC (30) ; et la puce de bande de base (100) est mise à la masse par l'intermédiaire séquentiellement du module diviseur de tension (10), du module de suppression de bruit (20), du module de conduction unidirectionnelle (40) et du module d'adaptation d'antenne (50) ;
le procédé de commutation est **caractérisé en ce que** le procédé de commutation comprend les étapes suivantes :
A, recevoir un signal radiofréquence donné par une station de base et balayer chaque bande de fréquence par le terminal mobile ;
B, déterminer si la bande de fréquence actuellement balayée est dans une pluralité de bandes de fréquence de travail, qui sont comprises dans un premier état de fonctionnement de l'antenne (300) quand la puce de bande de base (100) ne délivre pas le signal de commande, si tel est le cas, alors effectuer l'étape C ; si tel n'est pas le cas, alors effectuer l'étape D ;
C, travailler dans le premier état de fonctionnement par l'antenne (300) du terminal mobile, et quand le signal radiofréquence qui est donné par la station de base et reçu par le terminal mobile est conforme à des informations de la bande de fréquence d'un opérateur souhaité par une carte SIM du terminal mobile, s'enregistrer auprès d'un réseau pour que le terminal mobile travaille correctement ; et
D, délivrer le signal de commande par la puce de bande de base (100), l'antenne (300) du terminal mobile étant dans un deuxième état de fonctionnement qui comprend une autre pluralité de bandes de fréquence de travail, et balayer chacune des bandes de fréquence individuellement par le terminal mobile, quand le signal radiofréquence qui est donné par la station de base et reçu par le terminal mobile est conforme aux informations de la bande de fréquence de l'opérateur souhaité par la carte SIM du terminal mobile, s'enregistrer auprès du réseau pour que le terminal mobile travaille correctement.

2. Le procédé de commutation selon la revendication 1, **caractérisé en ce que** le module diviseur de tension (10) comprend une première résistance ; la puce de bande de base (100) est couplée au module de suppression de bruit (20) par l'intermédiaire de la première résistance.

3. Le procédé de commutation selon la revendication 1, **caractérisé en ce que** le module de suppression de bruit (20) comprend un premier condensateur et une première inductance ; le module diviseur de tension (10) est couplé au module de blocage CC (30) par l'intermédiaire de la première inductance ; et le module diviseur de tension (10) est mis à la masse par l'intermédiaire du premier condensateur.

4. Le procédé de commutation selon la revendication 1, **caractérisé en ce que** le module de blocage CC (30) comprend un deuxième condensateur ; une extrémité du deuxième condensateur est couplée au module de suppression de bruit (20) et au module de conduction unidirectionnelle (40), et l'autre extrémité du deuxième condensateur est couplée à l'antenne (300).

5. Le procédé de commutation selon la revendication 1, **caractérisé en ce que** le module de conduction unidirectionnelle (40) comprend une diode RF ; une anode de la diode RF est couplée respectivement au module de suppression de bruit (20) et au module de blocage CC (30), et une cathode de la diode RF est couplée au module d'adaptation d'antenne (50).

6. Le procédé de commutation selon la revendication 1, **caractérisé en ce que** le module d'adaptation d'antenne (50) comprend une deuxième inductance ; une extrémité de la deuxième inductance est couplée au module de conduction unidirectionnelle (40), et l'autre extrémité est mise à la masse.

7. Le procédé de commutation selon la revendication 1, **caractérisé en ce que** l'antenne (300) a un point de commutation ; une extrémité du point de commutation est couplée à l'antenne (300), et l'autre extrémité est couplée au module de blocage CC (30).

8. Le procédé de commutation selon la revendication 2, **caractérisé en ce que** l'antenne (300) a un point de commutation ; une extrémité du point de commutation est couplée à l'antenne (300), et l'autre extrémité est couplée au module de blocage CC (30).

9. Le procédé de commutation selon la revendication 3, **caractérisé en ce que** l'antenne (300) a un point de commutation ; une extrémité du point de commutation est couplée à l'antenne (300), et l'autre extrémité est couplée au module de blocage CC (30).

10. Le procédé de commutation selon la revendication 4, **caractérisé en ce que** l'antenne (300) a un point de commutation ; une extrémité du point de commutation est couplée à l'antenne (300), et l'autre extrémité est couplée au module de blocage CC (30).

11. Le procédé de commutation selon la revendication 5, **caractérisé en ce que** l'antenne (300) a un point de commutation ; une extrémité du point de commutation est couplée à l'antenne (300), et l'autre extrémité est couplée au module de blocage CC (30).

12. Le procédé de commutation selon la revendication 6, **caractérisé en ce que** l'antenne (300) a un point de commutation ; une extrémité du point de commutation est couplée à l'antenne (300), et l'autre extrémité est couplée au module de blocage CC (30).

13. Le procédé de commutation selon la revendication 1, **caractérisé en ce que** quand la puce de bande de base (100) ne délivre pas le signal de commande, l'antenne (300) est dans un premier état de fonctionnement qui comprend une pluralité de bandes de fréquence de travail ; quand la puce de bande de base (100) délivre le signal de commande, l'antenne (300) est dans un deuxième état de fonctionnement qui comprend une autre pluralité de bandes de fréquence de travail.
